# EUROPÄISCHE PATENTSCHRIFT

(11) **EP 2 798 695 B1**
(45) Veröffentlichungstag und Bekanntmachung des Hinweises auf die Patenterteilung: **18.01.2017**
(21) Anmeldenummer: 12783587.4
(22) Anmeldetag: 07.11.2012
(51) Int. Cl.: B60L 3/00, B60L 11/18, H01M 10/0525, H01M 10/63, H01M 10/613, H02J 7/04

(54) **VERFAHREN ZUR TEMPERATURREGELUNG VON MINDESTENS EINEM BATTERIEELEMENT, BATTERIE SOWIE KRAFTFAHRZEUG MIT EINER SOLCHEN BATTERIE**
METHOD FOR CONTROLLING THE TEMPERATURE OF AT LEAST ONE BATTERY ELEMENT, BATTERY AND MOTOR VEHICLE WITH SUCH A BATTERY
PROCÉDÉ DE RÉGULATION DE LA TEMPÉRATURE D'AU MOINS UN ÉLÉMENT DE BATTERIE, BATTERIE ET VÉHICULE ÉQUIPÉ D'UNE TELLE BATTERIE

(30) Priorität: 27.12.2011 DE 102011089962
(43) Veröffentlichungstag der Anmeldung: 05.11.2014
(73) Patentinhaber: Robert Bosch GmbH, 70442 Stuttgart (DE); Samsung SDI Co., Ltd., Yongin-si, Gyeonggi-do 446-577 (KR)
(72) Erfinder: YAN, Xiaofeng, 71384 Weinstadt (DE); PANKIEWITZ, Christian, 70378 Stuttgart (DE)
(74) Vertreter: Bee, Joachim
(86) Internationale Anmeldenummer: PCT/EP2012/071959
(87) Internationale Veröffentlichungsnummer: WO 2013/097967

(56) Entgegenhaltungen:
- DE-A1-102007 012 420
- DE-A1-102009 046 991
- JP-A- 2011 182 585
- US-A1- 2009 243 538
- US-A1- 2012 158 228

## Beschreibung

Die vorliegende Erfindung betrifft ein Verfahren zur Temperaturregelung von mindestens einem Batterieelement, eine Batterie sowie ein Kraftfahrzeug mit einer solchen Batterie, welche insbesondere einsetzbar sind, um bei einem Laden bzw. Entladen des mindestens einen Batterieelements Beschädigungen des mindestens einen Batterieelements zu vermeiden.

### Stand der Technik

Eine Lithium-Ionen-Batterie ist ein wiederaufladbarer elektrischer Energiespeicher, der einen breiten Einsatz in Handies, Laptops, tragbaren Konsumgeräten usw. findet. In der automobilen Anwendung stellen Lithium-Ionen-Batterien eine Schlüsseltechnologie für die Elektrifizierung des Antriebssystems dar. Je nach Kundenanforderung können unterschiedliche Lösungen erarbeitet werden, z. B. in Hybridfahrzeugen (engl.: HEV) ist eine Teilelektrifizierung realisiert, und in (rein) elektrischen Fahrzeugen (engl.: EV) wird 100 % elektrische Energie aus Lithium-Ionen-Batterien genutzt. Die Lithium-Ionen-Batterien können dabei je nach Einsatzspezifikationen modular aufgebaut werden und sind seriell oder parallel elektrisch verschaltet. Die Batterie ist in der Regel sowohl über den Elektromotor als auch über einen Anschluss an ein externes Netzwerk ladbar.

Ein wesentlicher Aspekt für eine erfolgreiche Etablierung dieser Technologie ist u. a. die Betriebssicherheit von Lithium-Ionen-Batterien. Dabei ist es erforderlich, die Batterie innerhalb eines optimalen Temperaturbereichs zu betreiben. Denn die Batterietemperatur hat einen großen Einfluss auf die Leistungsbereitstellung, Alterung (Leistungsminderung) bzw. Lebensdauer und Betriebssicherheit (Brandgefahr). Daraus ergibt sich, dass ein wohlüberlegtes thermisches Management-Konzept unabdingbar ist für die Verwendung von Lithium-Ionen-Batterien im Fahrzeug.

Für die automobile Anwendung ist es wichtig, Lithium-Ionen-Batterien vor einer Überhitzung zu schützen sowie eine Unterkühlung zu vermeiden. Dafür sorgt ein Thermomanagement-System durch notwendige Temperaturmessung bzw. -überwachung und eine effektive Gegensteuerung.

Bei Lithium-Ionen-Batterien ist die Leistungsfähigkeit beim Laden und Entladen temperaturabhängig, so erlaubt beispielsweise die Batterie bei tiefen Temperaturen einen deutlich geringeren Ladestrom bzw. Entladestrom, als wenn sich die Batterie in einem optimalen Betriebstemperaturbereich befindet. Dies führt dazu, dass das Aufladen der Batterie im Winter oder bei Kälte unter dem Gefrierpunkt deutlich länger dauert und die Startfähigkeit des elektrischen oder Hybridfahrzeugs erheblich verzögert werden kann.

Darüber hinaus führt ein zu starker Lade- bzw. Entladestrom bei tiefer Temperatur zu einer irreversiblen Beschädigung von Lithium-Ionen-Zellen, so dass ein sicherer Betrieb auf Dauer nicht mehr gewährleistet werden kann.

In der Veröffentlichung DE 198 06 135 A1 wird ein Verfahren zur Ermittlung der Temperatur einer Fahrzeugbatterie beschrieben, wobei die Temperatur indirekt in Abhängigkeit von wenigstens der Motortemperatur und der Umgebungstemperatur berechnet wird.

Aus der Veröffentlichung DE 10 2009 046 568 A1 ist ein Verfahren zum Betrieb von Fahrzeugen bekannt, bei dem das Temperaturmanagement der Fahrzeugbatterie in Abhängigkeit des einer Fahrtstrecke zugehörigen Lastprofils erfolgt.

### Offenbarung der Erfindung

Erfindungsgemäß wird bei dem Verfahren zur Temperaturregelung von mindestens einem Batterieelement ein Temperaturwert Tmin für die niedrigste Temperatur vorgegeben, bei der ein Laden oder Entladen des mindestens einen Batterieelements erfolgen soll. Weiter wird erfindungsgemäß ein Abkühlverhalten des mindestens einen Batterieelements ermittelt, wobei die Abkühlung bei einer Temperatur von T(t0) beginnt. Vorzugsweise beschreibt das Abkühlverhalten eine Abkühlung des mindestens einen Batterieelements, wenn das mindestens eine Batterieelement nicht belastet wird, insbesondere nicht ge- oder entladen wird. Eine bevorzugte Ausführungsform sieht vor, dass es sich bei dem mindestens einen Batterieelement um eine Traktionsbatterie eines Kraftfahrzeugs (EV oder HEV) handelt. In diesem Falle beschreibt das Abkühlverhalten eine Abkühlung des mindestens einen Batterieelements, wenn das Kraftfahrzeug abgestellt ist. Vorzugsweise wird das Abkühlverhalten durch eine Abkühlkurve beschrieben.

Erfindungsgemäß ist weiter vorgesehen, dass das Abkühlverhalten ausgewertet wird, um einen ersten Zeitpunkt zu ermitteln, an dem die Batterietemperatur T auf den Temperaturwert Tmin abgesunken ist oder ihn unterschreitet. Insbesondere umfasst die Auswertung eine Auswertung der Abkühlkurve. Die Abkühlkurve berücksichtigt vorzugsweise zumindest einen der Parameter Batterietemperatur und Umgebungstemperatur.

Weiter wird ein zweiter Zeitpunkt ermittelt, an dem eine Belastung durch Laden oder Entladen des mindestens einen Batterieelements wieder beginnt, z. B. durch Start eines Kraftfahrzeugs. Der erste und der zweite Zeitpunkt werden verglichen, um zu ermitteln, ob die Belastung durch Laden oder Entladen des mindestens einen Batterieelements beginnt, bevor die Batterietemperatur T auf den Temperaturwert Tmin abgesunken ist oder ihn unterschreitet. Es wird also geprüft, ob der erste vor dem zweiten Zeitpunkt liegt. Falls der erste vor dem zweiten Zeitpunkt liegt, heißt das, dass die Belastung des mindestens einen Batterieelements bei einer zu tiefen Temperatur erfolgen würde. Um dies zu verhindern, wird das mindestens eine Batterieelement mit Wärme beaufschlagt, z. B. durch ein Heizelement. Die Beaufschlagung mit Wärme erfolgt derart, dass die Batterietemperatur T zum zweiten Zeitpunkt höher als der oder gleich dem Temperaturwert Tmin ist.

In einer bevorzugten Ausführungsform ist vorgesehen, dass in dem Fall, dass der erste Zeitpunkt vor dem zweiten Zeitpunkt liegt, eine Sollbatterietemperatur T(t0)_soll ermittelt wird, die bei dem ermittelten Abkühlverhalten dazu führt, dass ohne eine (zusätzliche) Beaufschlagung mit Wärme der erste Zeitpunkt nach dem zweiten Zeitpunkt liegt oder der erste und der zweite Zeitpunkt gleich sind.

Es wird somit diejenige Temperatur ermittelt, welche die Batterie am Beginn der Abkühlung hätte mindestens aufweisen müssen, damit die Batterie bei Zugrundelegung des ermittelten Abkühlverhaltens zu dem zweiten Zeitpunkt den Temperaturwert Tmin unterschreitet, ohne die Batterie aufzuheizen.

Eine bevorzugte Ausführungsform sieht vor, dass die Sollbatterietemperatur T(t0)_soll durch Extrapolation der Abkühlkurve ermittelt wird.

In einer anderen bevorzugten Ausführungsform ist vorgesehen, dass die Temperatur des mindestens einen Batterieelements während der Benutzung des mindestens einen Batterieelements, insbesondere während der Fahrt eines elektrogetriebenen Kraftfahrzeugs, derart geregelt wird, dass die Batterietemperatur T am Ende der Benutzung zumindest so hoch ist wie die Sollbatterietemperatur T(t0)_soll. Dadurch wird erreicht, dass der Abkühlprozess, der nach der Benutzung des mindestens einen Batterieelements einsetzt, mit der Sollbatterietemperatur T(t0)_soll beginnt und somit das mindestens eine Batterieelement vor dem zweiten Zeitpunkt nicht tiefer abkühlt als Tmin. Die Regelung kann dabei vorsehen, dass in Abhängigkeit eines Lastprofils der Benutzung, insbesondere der Fahrt vor dem Abstellen des Kraftfahrzeugs, eine aktive Kühlung an die Sollbatterietemperatur T(t0)_soll angepasst wird. Insbesondere wird die Kühlung in Abhängigkeit des Lastprofils früher beendet.

In einer weiteren bevorzugten Ausführungsform ist vorgesehen, dass die Batterietemperatur einer Vielzahl von Benutzungen, insbesondere von Fahrten, gespeichert und analysiert wird. Vorzugsweise werden für die Analyse adaptive Methoden eingesetzt, insbesondere z. B. Fuzzy-Logik, da Fuzzy-Logik besonders gut geeignet ist, um Benutzungs- bzw. Fahrverhalten einzulernen. Darüber hinaus werden insbesondere auch der Temperaturverlauf mit den entsprechenden Thermomanagements und den entsprechenden Regelparametern gespeichert und ausgewertet.

Eine bevorzugte Ausführungsform sieht vor, dass die Auswertung der Benutzung eine Klassifizierung von Nutzungen umfasst. Beispielsweise können Fahrten zur und von der Arbeit mit im Wesentlichen gleichen oder ähnlichen Parameterwerten wie Lastprofil, Abfahrtzeiten und Standzeiten eine erste Klasse, Einkaufsfahrten am Wochenende eine zweite Klasse oder Fahrten in einer bestimmten Jahreszeit eine dritte Klasse bilden. Jeder dieser Klassen entspricht ein bestimmtes klassenspezifisches Abkühlverhalten, und es wird vorzugsweise jeder Klasse eine klassenspezifische Sollbatterietemperatur T(t0)_soll zugeordnet.

Ein weiterer Aspekt der Erfindung betrifft eine Batterie, die mit einem Modul kombiniert ist, wobei das Modul derart eingerichtet ist, dass ein Verfahren zur Temperaturregelung der Batterie ausführbar ist, wobei das Verfahren zumindest folgende Schritte umfasst:
- Vorgabe eines Temperaturwertes Tmin,
- Ermittlung eines Abkühlverhaltens des mindestens einen Batterieelements beginnend bei einer ersten Temperatur T(t0),
- durch Auswertung des Abkühlverhaltens, Ermittlung eines ersten Zeitpunktes, an dem die Batterietemperatur T den Temperaturwert Tmin erreicht oder unterschritten haben wird,
- Ermittlung eines zweiten Zeitpunktes für einen Beginn eines Aufladens oder Entladens des mindestens einen Batterieelements,
- falls der erste Zeitpunkt vor dem zweiten Zeitpunkt liegt, Beaufschlagung des mindestens einen Batterieelements mit Wärme derart, dass die Batterietemperatur T zum zweiten Zeitpunkt höher als der oder gleich dem Temperaturwert Tmin ist.

Vorzugsweise handelt es sich bei der Batterie um eine Lithium-Ionen-Batterie oder die Batterie umfasst elektrochemische Zellen, die als Lithium-Ionen-Batteriezellen ausgebildet sind.

Ein anderer Aspekt der Erfindung betrifft ein Kraftfahrzeug mit einem elektrischen Antriebsmotor zum Antreiben des Kraftfahrzeugs und einer mit dem elektrischen Antriebsmotor verbundenen oder verbindbaren Batterie gemäß dem im voranstehenden Absatz beschriebenen Erfindungsaspekt. Die Batterie ist jedoch nicht auf einen solchen Einsatzzweck eingeschränkt, sondern kann auch in anderen elektrischen Systemen eingesetzt werden.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnung und der nachfolgenden Beschreibung näher erläutert. Es zeigt:

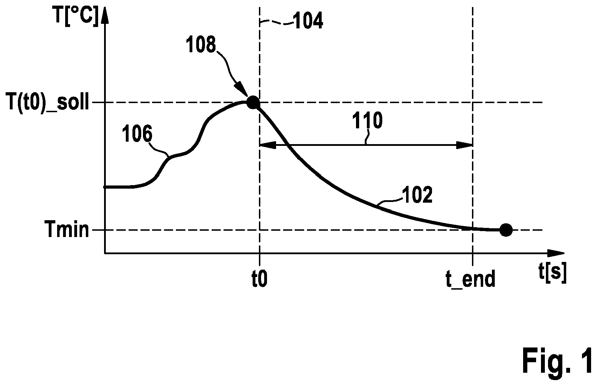

Figur 1 eine prinzipielle Veranschaulichung einer beispielhaften Vorausregelung der Batterietemperatur durch ein Temperaturmanagement bei einer Fahrt eines EV.

Nachfolgend soll die Erfindung an einer beispielhaften Vorausregelung der Batterietemperatur T in größerem Detail erläutert werden. Dabei soll betont werden, dass die Erfindung nicht auf dieses spezielle Ausführungsbeispiel eingeschränkt werden soll. Vielmehr sind auch andere Verfahren, welche eine Mindesttemperatur für den Beginn des Ladens oder Entladens von mindestens einem Batterieelement, z. B. einer Batterie, realisieren, von der Erfindung umfasst, wenn die Verfahren nur alle Merkmale des unabhängigen Anspruchs realisieren.

Ein beispielhaftes Thermomanagement-System zur Vorausregelung der Batterietemperatur T soll nachfolgend mit Bezug auf Figur 1 näher beschrieben werden.

Gemäß der beispielhaften Ausführungsform wird eine tiefste Batterietemperatur Tmin, z. B. eine Temperatur zwischen ca. 6 °C-15 °C, vorzugsweise zwischen 8 °C-12 °C, besonders bevorzugt eine Temperatur von ca. 10 °C, festgelegt. Vorzugsweise wird durch diese tiefste Batterietemperatur Tmin ein Einschaltpunkt für eine Batterieaufheizung festgelegt. Die Batterieaufheizung kann dabei bei Erreichen der tiefsten Batterietemperatur Tmin oder zu einem früheren Zeitpunkt gestartet werden. Vorzugsweise wird die Batterietemperatur T durch die Batterieaufheizung im Wesentlichen auf die tiefste Batterietemperatur Tmin geregelt. Das hat den Vorteil, dass keine Energie durch eine zu hohe Batterietemperatur verschwendet wird.

Gemäß der beispielhaften Vorausregelung der Batterietemperatur T wird eine Abkühlkurve 102 abgeschätzt oder durch adaptive Ermittlung gewonnen. Dabei bildet die Abkühlkurve 102 das künftige Temperaturverhalten der Batterie ab. Bei der Gewinnung der Abkühlkurve 102 werden die Umgebungstemperatur und die Batterietemperatur T berücksichtigt, die zu diesem Zweck überwacht werden.

Aus der gewonnenen Abkühlkurve 102 werden Informationen, wie z. B. die Abkühlrate, die Dauer bis zum Erreichen der tiefsten Batterietemperatur Tmin oder dergleichen, ermittelt. Außerdem wird in einer speziellen Ausführungsform die Batterietemperatur T(t0) am Beginn 104 der Abkühlung ermittelt und der Startzeitpunkt t_end, auch als zweiter Zeitpunkt bezeichnet, für das Aufladen oder Entladen der Batterie bestimmt.

Aus der Abkühlkurve 102 wird der Zeitpunkt tmin, auch als erster Zeitpunkt bezeichnet, ermittelt, zu dem die Batterietemperatur T die tiefste Batterietemperatur Tmin erreicht haben wird. Die Zeit bis zum Erreichen dieses Zeitpunkts tmin wird mit der Zeit verglichen, zu der ein erneutes Laden oder Entladen der Batterie beginnt, beispielsweise indem das von der Batterie getriebene Fahrzeug wieder startet. Falls die Abkühlzeit (tmin - t0) kleiner ist als die Zeit 110 vom Abstellen des Kraftfahrzeugs bis zum Beginn des Ladens oder Entladens (t_end - t0), z. B. bis zum Start des Fahrzeugs, wird die Abkühlkurve 102 in die Vergangenheit extrapoliert, um eine Sollbatterietemperatur T(t0)_soll zu ermitteln, welche die Batterie beim Abstellen des elektrogetriebenen Kraftfahrzeugs hätte aufweisen sollen. Die Sollbatterietemperatur T(t0)_soll ist somit die Batterietemperatur, die gemäß der Abkühlkurve 102 dazu führt, dass die Batterie bis zum Beginn des erneuten Ladens oder Entladens nicht unter die tiefste Batterietemperatur Tmin abkühlt. Wenn z. B. ein Kraftfahrzeug mit einer Batterie abgestellt wird, die mindestens die Sollbatterietemperatur T(t0)_soll aufweist, kühlt die Batterie bis zum erneuten Laden oder Entladen nicht unter die tiefste Batterietemperatur Tmin ab und ein Aufheizen der Batterie ist nicht erforderlich.

Der Beginn des erneuten Ladens oder Entladens kann beispielsweise durch die Zeit gegeben sein, zu der der Fahrer gewöhnlich startet.

Ein spezielles beispielhaftes Ausführungsbeispiel sieht vor, dass der Verlauf 106 der Batterietemperatur T(t) von Fahrten gespeichert und analysiert wird. Hierfür eignen sich adaptive Methoden, z. B. der Einsatz von Fuzzy-Logik, die sehr gut für ein Einlernen von Fahrverhalten, Verlauf 106 der Batterietemperatur T(t) mit entsprechendem Thermomanagement und/oder Regelparametern geeignet sind. Das Fahrverhalten kann dabei beispielsweise Fahrzyklen (wie Fahrten zur und von der Arbeit, Stadt- oder Autobahnfahrten oder dergleichen), Abstellmöglichkeiten, Jahreszeiten usw. umfassen. Aus diesen Informationen können verschiedene Kategorien von Fahrverhalten abgeleitet und gespeichert werden. Jeder Kategorie wird vorzugsweise eine eigene spezielle, kategoriespezifische Sollbatterietemperatur T(t0)_soll zugewiesen.

Es ist ebenfalls vorgesehen, dass die ermittelte Sollbatterietemperatur T(t0)_soll mit der zugelassenen höchsten Batterietemperatur T_max verglichen wird. Wurde eine Sollbatterietemperatur T(t0)_soll ermittelt, die höher als die zugelassene höchste Batterietemperatur T_max ist, wird T(t0)_soll = T_max gesetzt.

In dem Ausführungsbeispiel ist ferner vorgesehen, dass die Sollbatterietemperatur T(t0)_soll als Zieltemperatur 108 für das Fahrtende der nächsten Fahrt vorgegeben wird. Dabei wird ermittelt, zu welcher Kategorie die nächste Fahrt gehört. Das kann durch Auswertung des Fahrverhaltens, des Verlaufs 106 der Batterietemperatur T(t), des Thermomanagements und/oder der Regelparameter während der Fahrt erfolgen. Nach Ermittlung der Kategorie der Fahrt wird eine kategoriespezifische Sollbatterietemperatur T(t0)_soll als Zieltemperatur 108 für das Fahrtende gesetzt. Die aktive Temperaturregelung für die Batterie erfolgt dann derart, dass die Batterietemperatur am Fahrtende nicht geringer ist als die für diese Fahrt gesetzte Sollbatterietemperatur T(t0)_soll. Insbesondere wird die aktive Kühlung während der Fahrt an diese Sollbatterietemperatur T(t0)_soll angepasst. Je nach prädiktiertem restlichen Leistungsprofil wird der Zeitpunkt für ein Abschalten der Kühlung im Voraus bestimmt.

Zur aktiven Kommunikation mit dem Fahrer kann eine abgeschätzte Zeitdauer, in der die Batterie auf die tiefste Batterietemperatur Tmin abgekühlt sein wird, dem Fahrer übermittelt und akustisch oder optisch ausgegeben werden.

Darüber hinaus kann der abgeschätzte Zeitpunkt bei Erreichen der tiefsten Batterietemperatur Tmin als Triggersignal für eine automatische Aufheizung bzw. für eine programmierte Standheizung genutzt werden.

Die Erfindung beschränkt sich in ihrer Ausführungsform nicht auf die vorstehend angegebenen bevorzugten Ausführungsbeispiele. Vielmehr ist eine Anzahl von Varianten denkbar, die von dem erfindungsgemäßen Verfahren, der erfindungsgemäßen Batterie und dem erfindungsgemäßen Kraftfahrzeug auch bei grundsätzlich andersgearteten Ausführungen Gebrauch macht.

## Patentansprüche

1. Verfahren zur Temperaturregelung von mindestens einem Batterieelement, **gekennzeichnet durch**
- Vorgabe eines Temperaturwertes Tmin,
- Ermittlung eines Abkühlverhaltens des mindestens einen Batterieelements beginnend bei einer ersten Temperatur T(t0),
- **durch** Auswertung des Abkühlverhaltens, Ermittlung eines ersten Zeitpunktes tmin, an dem die Batterietemperatur T den Temperaturwert Tmin erreicht oder unterschritten haben wird,
- Ermittlung eines zweiten Zeitpunktes t_end für einen Beginn eines Aufladens oder Entladens des mindestens einen Batterieelements,
- falls tmin < t_end, Beaufschlagung des mindestens einen Batterieelements mit Wärme derart, dass die Batterietemperatur T zum zweiten Zeitpunkt t_end höher als der oder gleich dem Temperaturwert Tmin ist.

2. Verfahren nach Anspruch 1, wobei im Falle tmin < t_end eine Sollbatterietemperatur T(t0)_soll ermittelt wird, die bei dem ermittelten Abkühlverhalten dazu führt, dass tmin ≥ t_end gilt.

3. Verfahren nach Anspruch 2, wobei die Sollbatterietemperatur T(t0)_soll durch Extrapolation des ermittelten Abkühlverhaltens ermittelt wird.

4. Verfahren nach Anspruch 2 oder 3, wobei die Batterietemperatur T während einer Benutzung des mindestens einen Batterieelements derart geregelt wird, dass die Batterietemperatur T zu Beginn t0 der Abkühlung höher als die oder gleich der Sollbatterietemperatur T(t0)_soll ist.

5. Verfahren nach Anspruch 4, wobei unterschiedliche Arten der Benutzung definiert werden und für jede Art der Benutzung eine spezifische Sollbatterietemperatur T(t0)_soll ermittelt wird.

6. Verfahren nach Anspruch 5, wobei zur Definition der Art der Benutzung ein Benutzungsverhalten, der Verlauf (106) der Batterietemperatur T und/oder Parameter zur Regelung des Verlaufs (106) der Batterietemperatur T ausgewertet werden.

7. Verfahren nach Anspruch 5 oder 6, wobei zur Definition der Art der Benutzung adaptive Verfahren genutzt werden.

8. Verfahren nach einem der voranstehenden Ansprüche, wobei zur Ermittlung des Abkühlverhaltens die Umgebungstemperatur und/oder die Batterietemperatur T überwacht wird.

9. Batterie, welche mit einem Modul kombiniert ist, welches derart eingerichtet ist, dass ein Verfahren gemäß einem der Ansprüche 1 bis 8 zur Temperaturregelung der Batterie ausführbar ist.

10. Kraftfahrzeug mit einem elektrischen Antriebsmotor zum Antreiben des Kraftfahrzeugs und einer mit dem elektrischen Antriebsmotor verbundenen oder verbindbaren Batterie gemäß Anspruch 9.

## Claims

1. Method for controlling the temperature of at least one battery element, **characterized by**
- specifying a temperature value Tmin,
- determining a cooling characteristic of the at least one battery element starting at a first temperature T(t0),
- by analysis of the cooling characteristic, determining a first point in time tmin at which the battery temperature T reaches the temperature value Tmin or has fallen below the temperature value Tmin,
- determining a second point in time t_end for a start of charging or discharging of the at least one battery element,
- if tmin < t_end, applying heat to the at least one battery element such that the battery temperature T at the second point in time t_end is higher than or equal to the temperature value Tmin.

2. Method according to Claim 1, wherein in the case in which tmin < t_end, a target battery temperature T(t0)_target is determined that results in tmin ≥ t_end applying for the determined cooling process.

3. Method according to Claim 2, wherein the target battery temperature T(t0)_target is determined by extrapolation of the determined cooling characteristic.

4. Method according to Claim 2 or 3, wherein the battery temperature T during the use of the at least one battery element is regulated such that the battery temperature T at the start t0 of the cooling is higher than or equal to the target battery temperature T(t0)_target.

5. Method according to Claim 4, wherein different types of use are defined and a specific target battery temperature T(t0)_target is determined for each type of use.

6. Method according to Claim 5, wherein a usage characteristic, the profile (106) of the battery temperature T and/or parameters for regulating the profile (106) of the battery temperature T are analyzed for the definition of the type of use.

7. Method according to Claim 5 or 6, wherein adaptive methods are used for definition of the type of use.

8. Method according to any one of the preceding claims, wherein the ambient temperature and/or the battery temperature T is/are monitored for determining the cooling characteristic.

9. Battery, which is combined with a module that is arranged such that a method according to any one of Claims 1 to 8 for controlling the temperature of the battery can be implemented.

10. Motor vehicle with an electrical drive motor for driving the motor vehicle and a battery according to Claim 9 that is connected or can be connected to the electrical drive motor.

## Revendications

1. Procédé de régulation de la température d'au moins un élément de batterie, **caractérisé par** les étapes qui consistent à :
imposer une valeur de température Tmin,
déterminer le comportement de refroidissement du ou des éléments de batterie à partir d'une première température T(t0),
par évaluation du comportement de refroidissement, déterminer un premier instant tmin auquel la température T de la batterie atteint la valeur de température Tmin ou est descendue en dessous d'elle,
déterminer un deuxième instant t_end du début du chargement ou du déchargement du ou des éléments de batterie,
au cas où tmin < t_end, appliquer de la chaleur sur le ou les éléments de batterie de telle sorte qu'au deuxième instant t_end, la température T de la batterie soit supérieure ou égale à la valeur Tmin de la température.

2. Procédé selon la revendication 1, dans lequel au cas où tmin < t_end, une température de consigne T(t0)_soll de la batterie, qui entraîne que lorsque le comportement de refroidissement est déterminé, tmin ≥ t_end, est déterminée.

3. Procédé selon la revendication 2, dans lequel la température de consigne T(t0)_soll de la batterie est déterminée par extrapolation du comportement de refroidissement qui a été déterminé.

4. Procédé selon les revendications 2 ou 3, dans lequel la température T de la batterie est régulée pendant l'utilisation du ou des éléments de batterie de telle sorte qu'à l'instant t0 du refroidissement, la température T de la batterie soit supérieure ou égale à la température de consigne T(t0)_soll de la batterie.

5. Procédé selon la revendication 4, dans lequel différents types d'utilisation sont définis, une température spécifique de consigne T(t0)_soll de la batterie étant déterminée pour chaque type d'utilisation.

6. Procédé selon la revendication 5, dans lequel pour la définition du type d'utilisation, un comportement d'utilisation, l'évolution (106) de la température T de la batterie et/ou des paramètres de régulation de l'évolution (106) de la température T de la batterie sont évalués.

7. Procédé selon les revendications 5 ou 6, dans lequel des procédés adaptatifs sont utilisés pour définir le type d'utilisation.

8. Procédé selon l'une des revendications précédentes, dans lequel pour la détermination du comportement au refroidissement, la température ambiante et/ou la température T de la batterie sont surveillées.

9. Batterie combinée à un module conçu de telle sorte qu'il puisse exécuter un procédé selon l'une des revendications 1 à 8 de régulation de la température de la batterie.

10. Véhicule automobile doté d'un moteur électrique d'entraînement qui entraîne le véhicule automobile et d'une batterie selon la revendication 9, reliée ou apte à être reliée au moteur électrique d'entraînement.
